# EUROPEAN PATENT SPECIFICATION

(11) **EP 1 955 058 B1**
(45) Date of publication and mention of the grant of the patent: **13.04.2011**
(21) Application number: 06827814.2
(22) Date of filing: 13.11.2006
(51) Int. Cl.: G01N 27/447, B01L 3/00, C12Q 1/68

(54) **NUCLEIC ACID DETECTION USING A POROUS POLYMER ELECTRODE**
NUKLEINSÄUREDETEKTION MIT PORÖSER POLYMERELEKTRODE
DÉTECTION D'ACIDE NUCLÉIQUE À L'AIDE D'UNE ÉLECTRODE POLYMÈRE POREUSE

(30) Priority: 10.11.2005 US 735467 P; 30.06.2006 US 479175; 09.11.2006 US 558343
(43) Date of publication of application: 13.08.2008
(73) Proprietor: Life Technologies Corporation, Carlsbad, CA 92008 (US)
(72) Inventor: LAU, Aldrich N.K., Palo Alto, CA 94301 (US); FAULSTICH, Konrad, D-88682 Salem-Neufrach (DE); SCABOO, Kristian, M., Castro Valley, CA 94546 (US)
(74) Representative: Andrews, Martyn Peter
(86) International application number: PCT/US2006/044258
(87) International publication number: WO 2007/059167

(56) References cited:
- EP-A2- 1 016 864
- WO-A-2004/083843
- WO-A-2007/005770
- FR-A1- 2 857 427
- JP-A- 2003 004 701
- US-A- 5 846 727
- US-A1- 2004 118 689
- ELYASHEVICH G K ET AL: "COMPOSITE MEMBRANES WITH CONDUCTING POLYMER MICROTUBULES AS NEW ELECTROACTIVE AND TRANSPORT SYSTEMS" POLYMERS FOR ADVANCED TECHNOLOGIES, WILEY & SONS, BOGNOR REGIS, GB, vol. 13, no. 10-12, October 2002 (2002-10), pages 725-736, XP001143821 ISSN: 1042-7147

## Description

### Background

A variety of assays can be performed using small scale analytical systems, such as microfluidic systems. The sensitivity, portability, and durability of such systems can be enhanced by incorporating a porous polymer electrode as a system component. Porous polymer electrodes combine the favorable conductive properties of a conductive material, with a porous structure. A prior art microfluidic system comprising a porous electrode is described in WO 2004/083843.

### Brief Description of the Drawings

Figure 1 is a cross-sectional view of an exemplary porous polymer electrode assembly.

Figure 2 is a partial cross-sectional view of an alternative exemplary porous polymer electrode assembly.

Figure 3 is a perspective view of the face of another exemplary electrode assembly.

Figure 4 is a partial cross-sectional view of yet another exemplary electrode assembly.

Figure 5 is a cross-sectional view of yet another exemplary electrode assembly.

Figure 6 is a perspective view of yet another electrode assembly.

Figure 7 is a schematic depiction of an exemplary microfluidic system.

Figure 8 is a schematic depiction of an alternative selected microfluidic system.

Figure 9 is a plot showing the electropolymerization of methoxythiophene on reticulated vitreous carbon, as described in Example 1.

Figure 10 is a cyclic voltammogram showing the cycling of a porous polymer electrode between a positive and neutral charge, as described in Example 1.

Figure 11 is a fluorescent microgram of an exemplary electrode assembly held at a positive potential, as described in Example 2. The presence of adsorbed DNA on the electrode surface is demonstrated by fluorescent staining of the DNA by YOYO-1 nucleic acid stain.

Figure 12 is a fluorescent microgram of an exemplary electrode assembly held at a neutral potential, as described in Example 2. There is little or no DNA present on the electrode surface, and only a small amount within the electrode matrix, as demonstrated by fluorescent staining of the DNA by YOYO-1 nucleic acid stain.

### Detailed Description

### I. Porous Polymer Electrodes

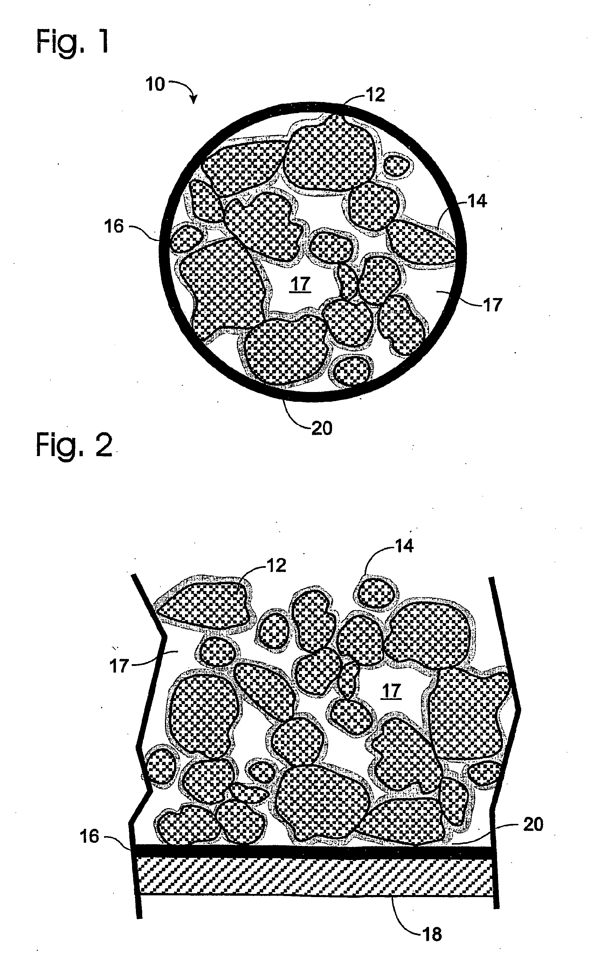

Figure 1 depicts an exemplary porous conductive polymer electrode assembly 10, as seen in cross-section. The particular electrode assembly of Fig. 1 is cylindrical, although a variety of geometries are suitable for the disclosed electrode assemblies. The electrode assembly includes a porous monolith 12 that provides a matrix for the resulting electrode. Applied to the surface of the porous monolith is a conductive polymer 14. Selected porous polymer electrodes were described in post-published WO2007/005770.

Conductive polymer 14 is typically in electrical contact with a source of electrical potential. A conductive layer 16 that is in contact with conductive polymer 14 provides the electrical contact. Conductive layer 16 of electrode assembly 10 encircles the cylindrical electrode assembly itself. The electrical contact may be direct, where conductive layer 16 physically contacts at least a portion of conductive polymer 14, or indirect, such as where porous monolith 12 is itself suitably electrically conductive. Any suitably robust and conductive material can be used to provide an electrical connection between the conductive polymer 14 and a source of electrical potential. Conductive layer 16 is typically a conductive metal, such as for example, gold, platinum, aluminum, nickel, or chromium. The conductive layer may include gold metal, or platinum.

The electrode assemblies may be fabricated in any of a variety of geometries. Typically, the electrode assembly is microscopically porous. That is, the assembly incorporates a matrix having pores, cavities, or channels 17. Typically the pores or channels range in size from about 2 µm to about 100 µm across, where at least a portion of the matrix surfaces are conductive and/or capable of being charged. The pores, cavities, or channels present in the porous matrix may be manually formed, or may present as a byproduct of the formation of porous monolith 12. These pores 17 may have a regular or irregular shape, and may be arranged regularly, such as in an array, or in no particular short- or long-range order. Typically, where the electrode assembly is porous, the microchannels 17, which may trace a tortuous path, permit the flow of a fluid through the matrix, so that the fluid is in at least intermittent contact with areas of conductive polymer. The particular porosity of the electrode assembly is dependent upon, and may be tailored by the particular method of preparation used. The porous character of the electrode assembly may occur by virtue of the conductive polymer being applied to a porous monolith 12 having the desired porosity.

Although the components of the electrode assembly may be selected and fabricated so that they possess sufficient strength and integrity for practical use, the durability of the resulting electrode may be improved by the presence of a substrate layer 18, as shown for the planar electrode assembly of Fig. 2. Although the substrate may participate in conducting electrical potential to the polymer 12, typically the substrate provides mechanical integrity to the electrode assembly, and optionally provides a base or foundation for fabrication of the electrode assembly.

Substrate 18 can be formed from a variety of materials. Typically, the substrate is manufactured from a material that is substantially chemically inert, and which may be readily shaped and/or machined. The substrate can include, for example, metal, glass, silicon, or other natural or synthetic polymers. The substrate can be formed into any of a variety of configurations. More particularly, the substrate can be shaped and sized appropriately so that the resulting electrode assembly can be used in conjunction with any of a variety of types of analytical system. For example, the electrode assembly may be used in conjunction with analytical systems that employ capillary channels, microwells, flow cells, or microchannels, among other architectures.

Where a substrate is present, conductive layer 16 is typically deposited on the surface of the substrate so as to form any electrical circuitry necessary for operating the electrode, including one or more electrical connections to a potential source. Application of the conductive layer 16 can be via, for example, electroless plating, electroplating, vapor deposition, spluttering, or any other suitable method of applying a conductive material.

To facilitate a strong interaction between conductive layer 16 and porous monolith 12 or conductive polymer 14, conductive layer 16 may be physically or chemically modified to enhance the interaction with the polymer. For example, where conductive layer 16 is a metallic layer, the metal surface can for example be chemically activated, or physically roughened, or both. In particular, where the conductive layer 16 is a gold metal layer, chemical activation of the gold surface with a thiol compound can be advantageous in attaching subsequent polymer layers. The gold surface can be modified with α-mercapto-PEG-ω-aldehyde that is subsequently treated with 3-aminopropyl methacrylate, resulting in an active surface moiety that can undergo copolymerization during the application of a polymeric porous monolith 12. A variety of sulfur-containing compounds and their derivatives (e.g. thiols or disulfides) can be used to modify the gold conductive surface.

Electrode assembly 10 can include a conductive surface polymer 14 that has been applied to an underlying porous monolith 12. Electrode assembly 10 can be prepared by preparing a porous monolith on conductive layer 16 in such a fashion that the applied porous monolith incorporates the desired topography, i.e. cavities, pores and/or irregularities having the desired size, shape, porosity and arrangement. The porous monolith can then be modified throughout its porous structure via application of the desired conductive polymer 14. The porous monolith may be prepared from conductive or nonconductive material, provided that an electrical connection is provided between the conductive polymer 14 and the conductive layer 16. Where the porous monolith 12 is substantially nonconductive, the porous monolith can be applied so that portions of the conductive layer 16 are exposed, and therefore placed in electrical communication with the conductive polymer 14, for example as shown at 20 in Figs. 1 and 2.

The porous monolith can be an electrically conductive material, for example, reticulated vitreous carbon (i.e., porous glassy carbon). Where porous monolith 12 is itself conductive, the porous monolith can serve as a direct electrical connection between conductive polymer 14 and conductive layer 16, and thereby to a source of applied electrical potential.

A selected porous monolith can be prepared from a three-dimensionally porous film of a poly(acrylic acid), or copolymers of a poly(acrylic acid), which can be polymerized *in situ* and covalently bound to the surface of conductive layer 16.

The exemplary porous polymer monolith film can be prepared by free radical polymerization of selected monomer subunits. Uni-molecular photoinitiators and/or bi-molecular photoinitiators can be used to initiate the polymerization reaction. It can be desirable to utilize a combination of unimolecular and bimolecular polymerization initiators, as such systems can enable free radical polymerization of vinyl and ethenyl monomers even in the presence of oxygen.

For example, a suitable porous polymer monolith can be prepared by polymerization of a mixture of acrylic acid and methylenebisacrylamide can be carried out using a combination of a unimolecular and bimolecular initiators. Suitable unimolecular initiators include, but are not limited to, benzoin esters, benzil ketals; alpha-dialkoxy acetophenones, alpha-hydroxy-alkylphenones, alpha-amino alkyl-phosphines, and acylphosphine oxides. Suitable bimolecular initiators typically require a coinitiator, such as an amine, to generate free radicals. Bimolecular initiators include, but are not limited to benzophenones, thioxanthones, and titanocenes.

The porous polymer monolith is prepared using phase separation/precipitation techniques to create the desired monolith porosity, and therefore the porosity and/or topography of the resulting electrode surface. Porous poly(acrylic acid) monolith can be precipitated by free radical polymerization in the presence of a porogen (an organic solvent), for example dioxane, heptane, ethyl ether, and methyl ethyl ketone. A thin film of a solution including acrylic acid, methylenebisacrylamide, and uni-/bimolecular photoinitiators in methyl ethyl ketone (MEK) can be photopolymerized using a UV-light source. As the polymerization proceeds, the crosslinked polymer which is not soluble in MEK precipitates (leading to phase separation) forming a porous film. Polymerization and subsequent phase separation can be used to form a polymer monolith having the desired degree of porosity. The porosity and pore size of the resulting polymer monolith can be tailored by the selection of the porogen (solvent), the particular monomer(s) used in the reaction, and the polymerization parameters utilized. The mechanical properties of the porous polymer monolith can also be tailored by the addition of an appropriate crosslinking agent and/or selection of desired co-monomer.

Typically, the mechanical integrity of the porous monolith is enhanced when the porous polymer film is bonded to the substrate covalently. For example, where the substrate is glass, the glass surface can be modified using a reactive silane reagent. By reacting the silanol groups on the glass surface with (3-methacryloxypropyl)methyldimethoxysilane, for example, a polymerizable surface methacryloxy-group is formed that can undergo copolymerization with a vinyl monomer, such as acrylic acid, covalently bonding the porous polymer monolith to the glass substrate.

A suitable porous polymer monolith can be prepared by sintering polymeric microparticles. Suitable microparticles may be commercially available, or they can be prepared beforehand. For example, where the microparticles include crosslinked poly(acrylic acid), suitable microparticles can be synthesized via inverse emulsion polymerization of acrylic acid. The polymerization process can be initiated by a thermal initiator, for example, potassium persulfate. Polymerization can further occur in the presence of a suitable polymerization catalyst, for example tetramethylethylenediamine, among others. Polymerization may also be performed in the presence of a desired crosslinking agent, for example N,N-methylenebisacrylamide, among others. The crosslinked poly(acrylic acid) microparticles can be purified, for example by dialysis, and collected by simple filtration.

To prepare the desired porous monolith, a composition that includes the polymeric microparticles can be coated onto the surface of the desired substrate. Typically, the polymer microparticles are prepared with a sufficient degree of crosslinking that the microparticles sinter, or become a coherent solid, at elevated temperatures to give a porous monolith having the desired porosity. To achieve the desired monolith character, the microparticle formulation can contain a thickening agent to control monolith thickness. The thickening agent can be, for example, a silica thixotropic agent, or a water-soluble polymer such as non-crosslinked poly(vinyl alcohol) or non-crosslinked poly(acrylic acid).

Any suitable process can be employed for applying the microparticle composition and sintering the microparticles. For example, the microparticle composition can be applied by spin casting, dip coating, spray coating, roller coating, or other application methods. The resulting coating is typically dried with application of external pressure at elevated temperature. For example, a pneumatic hot press can be used to sinter the microparticles to form the porous monolith. After the sintering process, any water-soluble thickening agent present can typically be removed by rinsing the porous monolith with water.

A primer can be used to improve the adhesion of the sintered monolith onto the desired substrate. For example, where the substrate is glass, the primer can be a silane-derivatized surface agent. The primer can also be a layer of crosslinked or non-crosslinked poly(acrylic acid), polymerized and chemically bonded to the substrate surface as described above.

Typically, where it is advantageous for the porous polymer electrode to exhibit a more open pore structure, for example in applications where a sample solution flows through the electrode assembly, the more open pore structure resulting from the phase separation/precipitation method of monolith preparation can be preferable.

The polymeric porous monolith formulations described above can offer hydrolytic stability, a high degree of control over the surface characteristics of the porous monolith, and cost-effectiveness. However, a variety of other porous monolith compositions may also be used to prepare a monolith having the desired degree of porosity, and that are suitable for application of an appropriately porous electrode assembly.

For example, the porous monolith may be formed from carbon. Specifically, the porous monolith can be formed from carbon cloth, carbon mat, reticulated vitreous carbon, carbon felt, or other carbon materials. A conductive adhesive can be used to bond the carbon porous monolith to the conductive layer. Any appropriate conductive adhesive can be used, including for example a paste comprising a carbon black powder dispersed in a thick solution of polyvinylidene fluoride (PVDF) in N-methylpyrrolidinone. The conductive layer can include, for example, metallic stainless steel or gold. The conductive surface polymer can then be applied to the porous monolith to form the desired electrode assembly.

The application of the conductive polymer 14 can be facilitated by selecting a porous monolith composition having a surface that will interact with the applied coating. For example, the porous monolith can include appropriate functional groups, such as carboxylic acid groups, among others, so that the applied conductive polymer can interact ionically and/or covalently with the porous monolith to enhance binding.

The conductive polymer can be applied to the porous monolith utilizing chemical oxidation. For example, ferric chloride can be used as an oxidant for the precursors pyrrole and bithiophene, and where the porous polymer monolith exhibits surface carboxylic acid groups, treatment of the porous monolith with ferric chloride typically results in association of the Fe(III) ions with the carboxylate groups. When the resulting ferric-loaded porous polymer monolith is exposed to a solution of an appropriate monomer, such as pyrrole or bithiophene, an oxidized and conductive polymer can be deposited on the porous monolith surface. It should be appreciated that any of a variety of analogous chemical oxidants may be used in this manner. For example, where the porous monolith surface is functionalized with ammonium moieties, sodium persulfate can be bound to the surface via the ammonium groups, and subsequently used to oxidize an applied polymer precursor.

Alternatively, the conductive polymer layer can be prepared electrochemically, either in the absence or in the presence of a chemical oxidant. In particular, where the pores present in the porous polymer monolith expose an underlying conductive layer, the conductive polymer can be grown from the surface of the conductive layer itself, creating an advantageous electrical connection between the conductive layer 16 and the conductive polymer 14. Various counter anions (dopants) can be used in this approach, and "doping-dedoping-redoping" techniques as described by Li et al. (Synthetic Metals, 92, 121-126 (1998**))** can be employed to to improve conductivity of the resulting conductive polymer. Where the porous monolith is itself conductive, a conductive polymer can be electrochemically oxidized and deposited on the surface of the porous monolith itself.

The conductive polymer layer can be prepared via the chemical and/or electrochemical oxidation of any appropriate monomer or combination of monomers. As used here, an appropriate monomer is one that, upon oxidation, produces a polymer that exhibits sufficient conductivity to be useful as an electrode surface layer. Typically, the resulting polymer can be oxidized and reduced in a controllable and reversible manner, permitting control of the surface charge exhibited by the polymer. Appropriate monomers include, but are not limited to, acetylene, aniline, carbazole, ferrocenylene vinylene, insole, isothianaphthene, phenylene, phenylene vinylene, phenylene sulfide, phthalocyanines, pyrrole, quinoxaline, selenophene, sulfur nitride, thiazoles, thionaphthene, thiophene, and vinylcarbazole, including their derivatives, and combinations and subcombinations thereof.

In a particular example, a non-conductive polyaniline is synthesized according to the protocol reported by Chiang and MacDiarmid (Synthetic Metals, 13, 193-205 (1986**)).** The non-conductive polyaniline, which is soluble in N-methylpyrrolidinone (NMP), can be applied to the porous monolith. The coated polyaniline can then be oxidized either electrochemically or chemically to create the conductive polymer layer. The ionic interaction between the conductive polyaniline and the negatively charged porous polymer monolith, as well as physical interlocking, anchors the conductive polymer to the porous monolith surface. Where the porous monolith is functionalized with carboxylic acid groups, these can serve as the counter anion of the conductive polymer. The positive charges on the outer surface of the conductive polymer surface can then be used to attract and/or immobilize negatively-charged analytes, and subsequently neutralized electrochemically, to release the captured analytes.

The porous polymer electrodes described herein typically offer a large electrode surface area. This enhanced surface area can offer advantages in selected applications, as will be discussed below. However, the surface area can also result in the electrode exhibiting a significant background double layer capacitance. Where this background signal is undesirable, it can be attenuated by modifying the surface of the porous electrode so that the electrode includes a plurality of discrete conductive domains, where the domain can be partially or fully isolated by a nonconductive matrix. Such a configuration can isolate the conductive domains, thereby reducing the geometric area of the electrode while still allowing for overlap of the diffusion zones of the respective conductive domains. This can reduce the charging current while still allowing for maximal sampling of the solution phase analyte(s). The resulting electrode offers an effectively large surface area for capture and Faradic signals, but with reduced capacitance and therefore reducing background signal. For example, background signal could be reduced by as much as three orders of magnitude.

An electrode having a plurality of discrete conductive domains may be prepared by first preparing a porous polymer electrode, as described above, and then filling the pores in the porous electrode assembly with a non-porous and non-conductive material. The pores can be filled with a low viscosity two-part epoxy resin, or a latent cure adhesive, among other formulations. The plurality of conductive domains can then be freed mechanically, for example by polishing, sanding, drilling, or other shaping, to reveal conductive polymer islands within the nonconducting matrix. Such conductive islands can have diameters on the order of nanometers to millimeters.

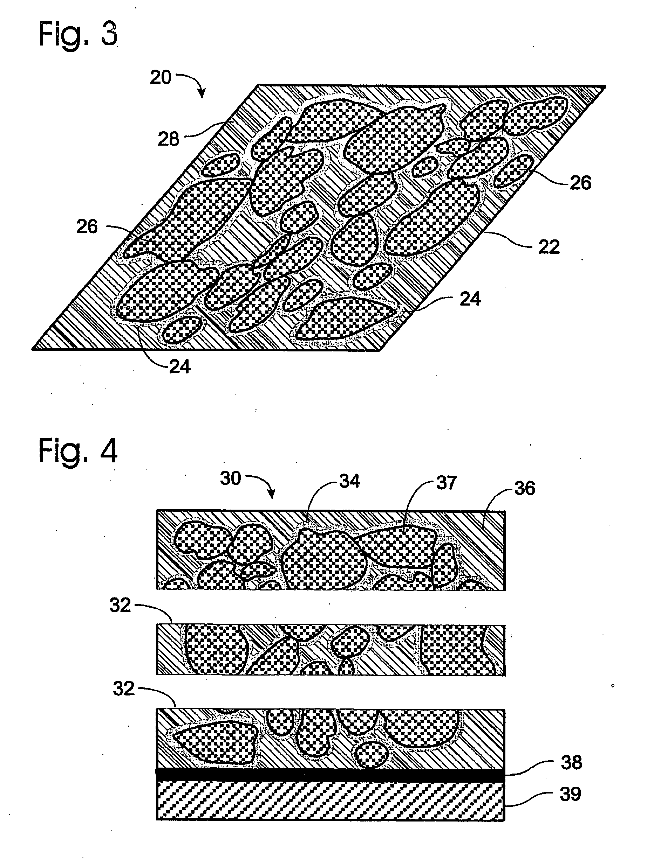

As shown in Fig. 3, a surface of the filled electrode matrix is exposed, resulting in a planar electrode assembly 20. The exposed electrode face 22 includes conductive domains 24 separated by nonconductive material, either a nonconductive porous monolith 26, or nonconductive filler material 28. Although Fig. 3 illustrates certain relative dimensions and distributions for elements 24, 26, and 28, these dimensions and distributions are exemplary, and can be varied according to the needs of the user.

Alternatively, the advantages of having isolated conductive domains and a porous electrode matrix may be achieved by drilling or otherwise machining channels in the filled electrode matrix, to yield a porous electrode assembly 30, as shown in Fig. 4. The resulting channels 32 expose isolated domains of conductive polymer 34 in the nonconductive filler material 36 and porous monolith 37. The channels can be randomly distributed, or placed in a regular array. The resulting electrode assembly permits the flow of a sample of interest through or past the electrode, similar to the above-described porous electrode assemblies, with the additional advantage of reduced background signal.

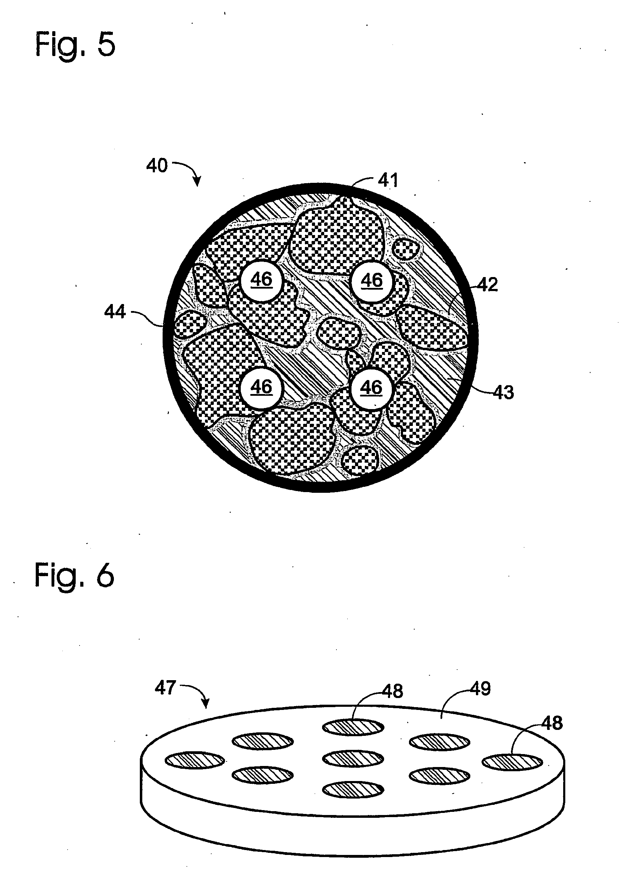

In another example, if the voids 17 of porous polymer electrode 10 of Fig. 1 were filled with a nonconductive filler material, as discussed above, and the upper and lower faces of the electrode were covered as well, a porous electrode matrix could be prepared by machining channels through the cylindrical matrix, as shown in a cross-sectional view in Fig. 5. Electrode matrix 40 includes a nonconductive porous monolith 41, coated with conductive polymer 42, and the resulting voids are filled with nonconductive filler 43. At least a portion of conductive polymer 42 is in electrical contact with a conductive layer 44. Channels 46 extend along the cylindrical axis of the electrode assembly, exposing at least a portion of the conductive polymer 42 on the inner surfaces of the channels, and permitting solution to flow through the electrode assembly. The electrode matrix can include an array of channels having any suitable shape, number of channels, and array geometry.

As an alternative to machining, a nonconductive filler material may include a negative photoresist material. Thus, illumination and development of the negative resist in selected areas can also expose isolated conductive islands.

As shown in Fig. 6, an electrode assembly 47 can include an array of conductive porous polymer electrode plugs 48, prepared within apertures or cavities formed in a nonconductive substrate 49. This type of electrode assembly may be prepared by polymerizing a porous electrode matrix as described above, within an appropriate cavity or hole in the nonconductive substrate. Electrode assembly 47 can also incorporate a conductive material in electrical connection with the porous polymer electrode plugs (not shown), for example including copper, gold, or other sufficiently inert and conductive material.

### II. Application of the Porous Polymer Electrode

With particular respect to analytes that are nucleic acid polymers, the nucleic acid polymer can be present as nucleic acid fragments, oligonucleotides, or larger nucleic acid polymers including polymers exhibiting secondary or tertiary structure. The nucleic acid fragment can contain single-, double-, triple-, and/or quadruple-stranded structures. The nucleic acid may be a small fragment, or can optionally contain at least 8 bases or base pairs. The analyte can be a nucleic acid polymer that is RNA or DNA, or a mixture or a hybrid thereof. Any DNA is optionally single-, double-, triple-, or quadruple-stranded DNA; any RNA is optionally single stranded ("ss") or double stranded ("ds"). The nucleic acid polymer can be a natural polymer (biological in origin) or a synthetic polymer (modified or prepared artificially).

Where the nucleic acid polymer includes modified nucleotide bases, the bases can include, without limitation, 4-acetylcytidine, 5-(carboxyhydroxymethyl)uridine, 2'-O-methylcytidine, 5-carboxymethylaminomethyl-2-thiouridine, 5-carboxymethylaminomethyluridine, dihydrouridine, 2'-O-methylpseudouridine, beta-D-galactosylqueuosine, 2'-O-methylguanosine, inosine, N6-isopentenyladenosine, 1-methyladenosine, 1-methylpseudouridine, 1-methylguanosine, 1-methylinosine, 2,2-dimethylguanosine, 2-methyladenosine, 2-methylguanosine, 3-methylcytidine, 5-methylcytidine, N6-methyladenosine, 7-methylguanosine, 5-methylaminomethyluridine, 5-methoxyaminomethyl-2-thiouridine, beta-D-mannosylqueuosine, 5-methoxycarbonylmethyl-2-thiouridine, 5-methoxycarbonylmethyluridine, 5-methoxyuridine 2-methylthio-N6-isopentenyladenosine, N-((9-beta-D-ribofuranosyl-2-methylthiopurine-6-yl)carbamoyl)threonine, N-((9-beta-D-ribofuranosylpurine-6-yl)N-methylcarbamoyl)threonine, uridine-5-oxyacetic .acid-methylester, uridine-5-oxyacetic acid, wybutoxosine, pseudouridine, queuosine, 5-methyl-2-thiouridine, 2-thiocytidine, 5-methyl-2-thiouridine, 2-thiouridine 4-thiouridine, 5-methyluridine N-((9-beta-D-ribofuranosylpurine-6-yl)-carbamoyl)threonine, 2'-O-methyl-5-methyluridine, 2'-O-methyluridine, wybutosine, 3-(3-amino-3-carboxy-propyl)uridine, and (acp3)u.

The nucleic acid polymer analyte is optionally present in a condensed phase, such as a chromosome. The nucleic acid polymer optionally contains one or more modified bases or links or contains labels that are non-covalently or covalently attached. For example, the modified base can be a naturally occurring modified base or a synthetically altered base. The nucleic acid polymer can also be, or can include, peptide nucleic acids such as N-(2-aminoethyl)glycine units. The nucleic acid polymer can be modified by a reactive functional group, or be substituted by a conjugated substance. The nucleic acid polymer may be modified, by the association of an electrochemically active tag for electrochemical detection.

The analyte solution can be, or can be derived from, a biological sample that is prepared from a blood sample, a urine sample, a swipe, or a smear, among others. Alternatively, the sample may be an environmental sample that is prepared from an air sample, a water sample, or a soil sample, among others. The analyte solution can be obtained by extraction from a biological structure (e.g. from lysed cells, tissues, organisms or organelles). The sample typically is aqueous but can contain biologically compatible organic solvents, buffering agents, inorganic salts, and/or other components known in the art for assay solutions.

The analyte of interest is typically present in an aqueous, mostly aqueous, or aqueous-miscible solution prepared according to methods generally known in the art. The electrode is incorporated in an apparatus or device, including suitable fluidics for preparing the analyte solution and bringing the analyte solution into contact with the electrode. A chromatographic column can be placed upstream from the porous polymer electrode, and the chromatographic column can be configured to perform one or more of filtration, separation, isolation, and pre-capture/release of biomolecules or cells.

The step of detecting the analyte comprises any method of electrochemically detecting the presence of the analyte at the electrode. Typically, a potential is applied to the electrode surface, or the applied potential is varied, and a resulting current is determined. Alternatively, the potential can be held at a selected value, and a change in current is determined over time, or a constant current can be applied and the resultant voltage determined. The presence of the analyte may be qualitatively detected, or the amount of analyte can be quantitatively determined, typically by comparison with a standard, such as a known amount of the same or similar analyte. Detection and quantitation can be enhanced by the presence of an electrochemical label that is either covalently or noncovalently associated with the analyte.

The correlation generally can be performed by comparing the presence and/or magnitude of the electrochemical response to another response (e.g., derived from a similar measurement of the same sample at a different time and/or another sample at any time) and/or a calibration standard (e.g., derived from a calibration curve, a calculation of an expected response, and/or an electrochemically active reference material).

The high surface area of the disclosed porous polymer electrode improves analyte detection sensitivity. Particularly since the analyte is a charged analyte, and an appropriate potential is applied to the electrode to capture the analyte. The porous polymer electrode is used to capture and/or concentrate the charged analyte by electrostatically attracting the analyte to the electrode surface. By capturing the analyte from a flowing sample, for example, the sample can be depleted of analyte. By removing the applied potential, or by reversing the polarity of the applied potential, the captured analyte may be released into solution for collection or further characterization. This is a particularly advantageous application since the analyte is a nucleic acid or nucleic acid fragment.

The charged analyte is a nucleic acid polymer exhibiting an overall negative charge. By applying a positive charge to the porous polymer electrode, and by selecting an electrode having pores and surface features complementary to the nucleic acid polymer of interest, the nucleic acid polymers are captured and concentrated at the electrode surface. The porous polymer electrode can be switched between a positively oxidized state and a neutral reduced state, and this reversibility is used to capture and release negatively charged nucleic acid fragments. The porous polymer electrode is used to detect and/or quantify nucleic acid fragments resulting from PCR amplification:

A variety of assays for detecting nucleic acid amplification are described in post-published US2006/087319 . Selected assays disclosed in the application may be advantageously carried out using a porous polymer electrode as disclosed herein, and in particular may be advantageously carried out using a microfluidic device incorporating a porous polymer electrode, as described below.

Background noise in electrochemical systems comes from inherent background currents in the measurement systems and capacitive charging currents. As these currents can be small, a better signal-to-noise ratio and sensitivity can be achieved with an electrochemical device than in devices utilizing other detection methods. Further, as electrochemical methods typically use small currents and voltages, devices incorporating the porous polymer electrode typically do not require large, expensive, and heavy power supplies. This is an advantage over devices that require light sources for optical detection methods, as an electrochemical-based device typically does not require optical components such as light sources; mirrors, filters, detectors, support mechanics, or movement mechanics. Electrochemical-based devices therefore lend themselves to use in portable and/or handheld devices.

### III. Apparatus Incorporating a Porous Polymer Electrode

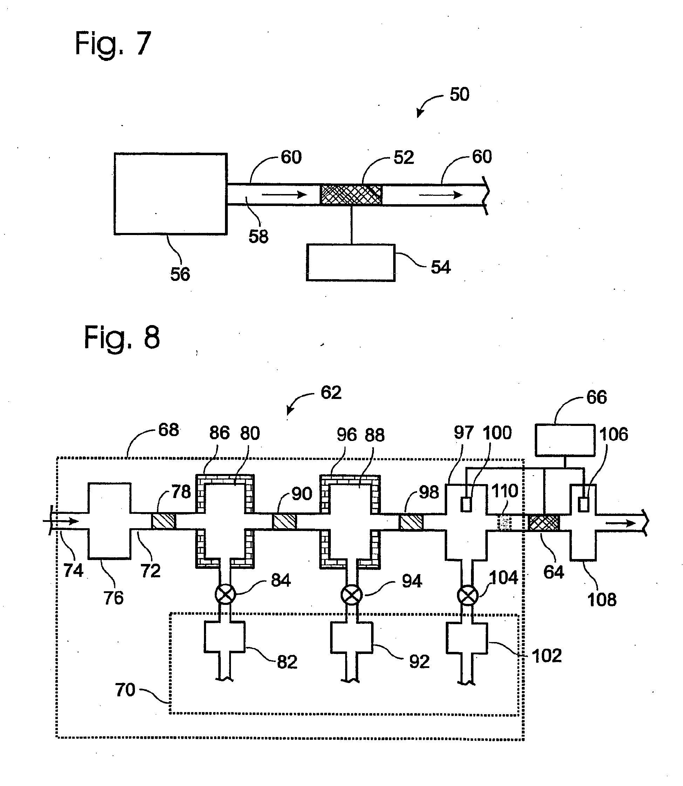

A representative microfluidic device, suitable for the amplification and subsequent detection of a nucleic acid polymer is shown in Figure 8. The microfluidic device 62 is depicted schematically, and for the sake of simplicity, is not intended to depict all of the microchannels and wells that may be present in such a microfluidic system. Selected microfluidic devices for amplification and detection of nucleic acid polymers, are described in EP1016864,US 5846727 and JP2003004701.

The microfluidic device 62 includes a porous polymer electrode assembly 64, and a controller 66 configured to control the electrical potential applied at electrode assembly 64. The controller typically serves as both a power supply and instrument for performing amperometric or potentiometric measurements.

Upstream from the porous polymer electrode assembly 64 is a sample preparation region 68 of the microfluidic device that is configured to prepare a sample solution of interest. Sample preparation region 68 includes reagent reservoirs 70 configured to supply reagents useful for the sample preparation process. The various chambers of the microfluidic device are interconnected via a microfluidic channel system 72 suitable for transporting reagents, sample solutions, and reaction products through the device, and particularly transport such species to and from the electrode assembly 64.

A sample, typically a biological sample, can be introduced into the microfluidic device via an inlet 74. The sample can be introduced by injection, by electro-osmosis, by capillary action, or any other suitable introduction method. The microfluidic device optionally includes a pretreatment well or chamber 76. Pretreatment chamber 76 permits the biological sample to be mixed with reagents for sample digestion, liquidation, or diluting, if desired. Such pretreatment can be used to render the biological sample fluid enough to enhance the effectiveness of downstream processes.

After this pretreatment, the sample is optionally filtered. For example, the sample can be transported, typically by electro-osmotic pumping, through a filter 78 into a reaction chamber 80. Filter 78 can be used to remove large particles that may interfere with downstream reactions. The filter can be any appropriate filtering agent that is compatible with the biological sample under investigation. For example, filter 78 can include a membrane filter, or a fritted glass filter having a relatively large pore size, for example approximately 100 µm.

Reaction chamber 80 can be used for lysis and denaturing of the sample. As shown in Fig. 7, reagents useful for the lysis and/or denaturing process can be added from reagent reservoir 82 via valve 84. The lysis and/or denaturing process can be accelerated by heating via heating unit 86. Heating unit 86 can include one or more warming lamps, heating coils, fluid heat exchangers, or any other suitable heating apparatus, as well as fans, blowers, heat exchangers, or other suitable cooling mechanism for cooling reaction chamber 80.

After lysis and/or denaturing, the sample is transported to PCR chamber 88, optionally passing through an additional filter 90 en route. Filter 90, when present, is typically finer than filter 78, when present. For example, unlike a relatively coarse filter 78 having a pore size of about 100 µm, filter 90 can be selected for a pore size of approximately 5-10 µm. Such a fine filter can be used to remove undesired byproducts of the lysis/denaturing process. Once the sample has reached PCR chamber 88, reagents useful for the PCR process can be added to PCR chamber 88 from PCR reagent reservoir 92 via valve 94. PCR chamber 88 can be heated by heating unit 96. Similar to heating unit 86, heating unit 96 can be any appropriate heating mechanism for facilitating the PCR process, and typically includes a cooling mechanism, so that heat cycling can be accomplished in PCR chamber 88. Selected suitable thermal cycling mechanisms are described in U.S. Patent no. 5,455,175 to Wittwer et al. (1995) .

After PCR is complete, the sample can be transported to electrolysis chamber 97 through another filter 98 having a pore size of approximately 5-10 µm. Electrolysis chamber 97 includes an electrode 100, controlled by a controller. Although depicted as being electrically connected to controller 66 in Fig. 7, the controller for electrode 100 can be the same or different from the controller for porous polymer electrode 64. Appropriate reagents can be added to electrolysis chamber 97 from reagent reservoir 102 via valve 104. The reagents added to the electrolysis chamber can include, for example, as capture probe for the amplified nucleic acid polymer that incorporates a detection reagent.

When present, the capture probe is typically a selective binding partner for the amplified nucleic acid polymer. The capture probe can be from any suitable source and can have any suitable structure. The capture probe can be obtained from a natural and/or artificial source. Accordingly, the capture probe can be synthesized or formed by a cell(s), a cell lysate(s), a synthetic enzyme(s), chemical synthesis, enzymatic cleavage, chemical cleavage, and/or ligation, among others. The capture probe thus can be RNA, DNA, or any suitable analog thereof. Furthermore, the capture probe can belong to the same structural class of molecules as the analyte (e.g., each being DNA or each being RNA) or to a different class of molecules (e.g., the capture probe being a nucleic acid analog and the analyte being RNA or DNA, among others).

The capture probe can have any suitable backbone structure relative to the amplified nucleic acid polymer. In some examples, the capture probe can have a different backbone than the analyte, such as a less charged backbone in the capture probe and a more charged backbone in the analyte (or vice versa). With this arrangement, the amplified nucleic acid polymer can have a greater affinity than the capture probe for the porous polymer electrode, or (vice versa). The analog backbone of the capture probe can lack phosphate moieties, ribose moieties, or both. In some examples, the analog backbone of the capture probe can include a plurality of amide moieties. In some examples, the analog backbone can be a peptide backbone, such that the analog is a peptide nucleic acid. A peptide backbone, as used herein, is any backbone that can be hydrolyzed to release a plurality of amino carboxylic acids, particularly alpha-amino carboxylic, acids. In exemplary embodiments, the peptide nucleic acid has a backbone formed of linked N-(2-aminoethyl)-glycine subunits, which position an array of nucleotide bases through methylene carbonyl moieties of the backbone.

The capture probe can be configured to form a duplex with the amplified nucleic acid through base-pair interactions, so that the capture probe and analyte together form an at least partially double-stranded nucleic acid. Accordingly, a section (or all) of the analyte can be complementary to a section (or all) of the analyte. Alternatively, or in addition, the capture probe can include a double-stranded region, independent of the analyte, for example, to couple the capture probe to the matrix of the optical element. The capture probe can be configured to hybridize (base-pair) to any region of the analyte, for example, the capture probe can hybridize adjacent an end or spaced from the end of the analyte.

In one example, a suitable capture probe includes one or more detectable electrochemical labels that can be associated with the capture probe either covalently or noncovalently. The capture probe can further include, without limitation, a luminescent label (including fluorescent, luminescent, and chemiluminescent labels), or a colorimetric label, or a combination thereof. Alternatively, the selected label can be detected indirectly, for example by the interaction of the label with an additional detection reagent.

Where the label interacts with an additional detection reagent, the label is typically a member of a specific binding pair, such as a hapten for a labeled antibody, or a nucleic acid sequence that is labeled by a complementary sequence. The label may include a digoxigenin moiety, for example, that can be used as a target for horseradish peroxidase or alkaline phosphatase detection, followed in turn by chemiluminescent or colorimetric detection. The additional detection reagent can include an electrochemical mediator, so that association of the label with the additional detection reagent facilitafes electrochemical detection of the capture probe.

In a particular example, detection of amplification is via electrochemical detection at the porous polymer electrode 64, optionally via the presence of an electrochemical mediator.

In a particular example, detection of amplification utilizes a capture probe that includes a primer modified with an electrochemical label, and a specific complexing protein. Such a capture probe can be added to electrolysis chamber 97, so that the amplified nucleic acid polymer of interest associates with both the labeled primer and the complexing protein to form a complex. After the noncovalent complex is formed, a potential is imposed between electrode 100 in electrolysis well 97 and electrode 106 in electrolysis well 108. Typically, electrode 100 is held at a cathodic potential, and electrode 106 is held at an anodic potential so that, in conjunction with a thin layer of crosslinked polyacrylamide gel 110, electrophoresis occurs across gel 110. While electrophoresis is occurring, the porous polymer electrode is typically either electrically neutral or held in a non-conductive state.

The polyacrylamide gel is typically prepared with a low degree of crosslinking. Under these electrophoretic conditions, all nucleic acid fragments with the exception of target DNA that has complexed and hybridized to the protein and labeled primer, will migrate to electrolysis chamber 108. The relatively large nucleic acid-protein complex is left behind due to its large size and relative inability to penetrate the thin layer of crosslinked polyacrylamide gel.

Once any excess and unbound electrochemically active capture probe and non-target DNA fragments have been removed from the vicinity of the porous polymer electrode assembly 64, an anodic potential can be applied to the electrode assembly 64, while electrode 100 in electrolysis chamber 97 is held at a cathodic potential. If not already conductive, the porous polymer electrode is converted to its conductive state and positively charged.

As the hybridized nucleic acid complex migrates from the thin layer of crosslinked polyacrylamide gel 108, the complex can be electrostatically captured at the positively charged porous polymer electrode, and concentrated on the internal electrode surface. The target nucleic acid polymer can be detected electrochemically if the electrochemical label selected for use is compatible with the material of the polymer electrode. The electrochemical detection of the target nucleic acid sequence depends on the redox potential of the electrochemically active label when associated with the primer, the complexing protein used, and the target nucleic acid polymer.

The specific complexing protein used to form the nucleic acid complex can be selected from any of a group of recombinases, single strand binding proteins, antibodies, transcription factors or any other nucleic acid-binding protein. The binding may also be mediated by one or more additional reagents, including digoxigenin or biotin, among others.

### Examples

### Example 1

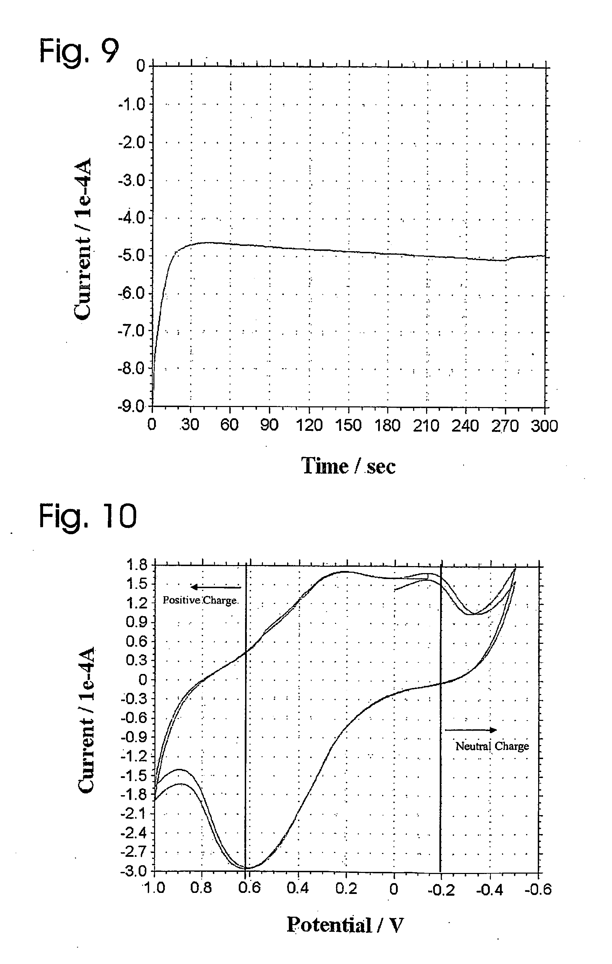

A portion of reticulated vitreous carbon (RVC) foam (average pore size about 60 µm, 12-15% density, DUOCEL), roughly 3 mm x 5 mm x 15 mm in size, is cleaned by rinsing in acetone and dried under nitrogen. Electrical contact to the foam is achieved using an alligator clip. The RVC electrode is dipped into a stirred solution of 1:3 acetonitrile: deionized water containing 35 mM 3-methoxythiophene and 10 mM sodium perchlorate. The area of the RVC exposed to the solution is roughly 3 mm x 5 mm x 8 mm. Electropolymerization of the methoxythiophene proceeded at 1.4 V vs. Ag/AgCl for 300 sec using a platinum foil counter electrode. This activation process is shown in Fig. 9. After polymerization, the electrode was removed from the solution, rinsed with water and placed back into a solution of 10 mM sodium perchlorate. Cyclic voltammetry (20mV/s) was then run to switch the charge state of the conductive polymer coating between positive and neutral as shown in Fig. 10.

### Example 2

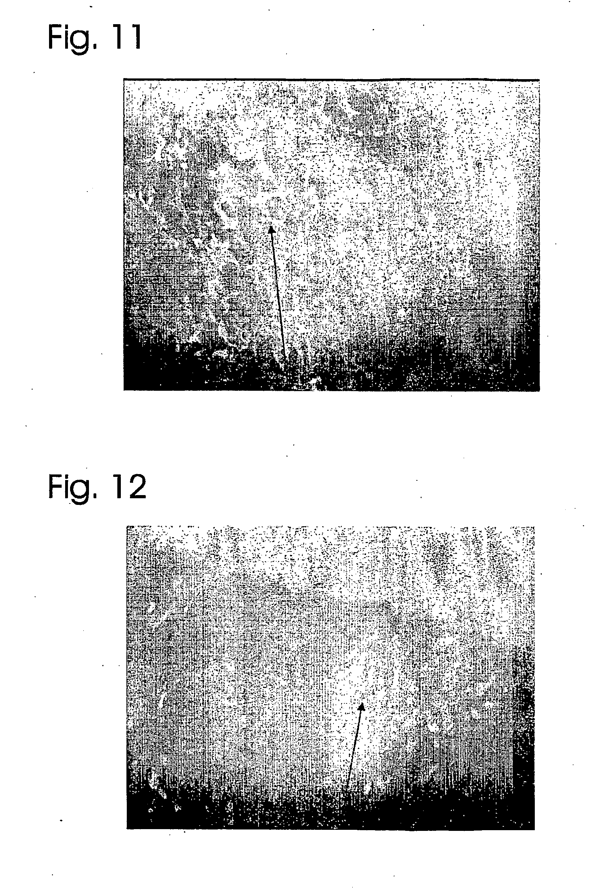

A porous polymer electrode assembly is prepared by electrochemically depositing positively charged poly(3-methoxythiophene) in its oxidized state on the surface of a monolith of reticulated vitreous carbon, as described in Example 1. The ability of the resulting electrode assembly to capture nucleic acids is verified by exposing the electrode assembly to human genomic DNA that is prestained with the fluorescent nucleic acid stain YOYO-1 (Molecular Probes, Inc., Eugene, OR). As shown in Fig. 11, fluorescent micrograms of the positively charged electrode assembly indicate the presence of human DNA on the surface of the electrode assembly. As a control, the experiment is repeated with the poly(3-methoxythiophene) polymer electrochemically reduced to its neutral state. As shown in Fig. 12, the neutral electrode assembly shows little or no YOYO-1 fluorescence on the surface of the electrode assembly, and only a small amount of fluorescence within the electrode matrix.

## Claims

1. A method of detecting a nucleic acid, comprising:
introducing a sample thought to contain a target nucleic acid into a microfluidic device comprising:
a substrate (18) having a plurality of microfluidic chambers and channels fabricated therein;
a cover adhering to the substrate (18) surface;
an inlet (74) configured to receive a biological sample;
one or more chambers (76) configured for pretreatment of the biological sample;
one or more chambers (88) configured for subjecting the biological sample to a polymerase chain reaction;
one or more chambers (97) configured to separate a nucleic acid polymer amplified by the polymerase chain reaction; and
a porous polymer electrode (64) configured to detect the amplified nucleic acid polymer;
pretreating the sample;
subjecting the pretreated sample to the polymerase chain reaction; and
separating amplified nucleic acid polymers from the polymerase chain reaction mixture;
wherein the method further comprises detecting the amplified nucleic acid polymers by using the porous polymer electrode (64).

2. The method of claim 1, where pretreating the sample includes one or more of digesting, liquidating, diluting, lysing, and denaturing the sample.

3. The method of claim 1, further comprising labeling the amplified nucleic acid polymers with an electrochemically active label.

4. The method of claim 3, further comprising labeling the amplified nucleic acid polymers with a specific complexing protein.

5. The method of claim 7, where separating the amplified nucleic acid polymers includes electrophoretically separating the amplified nucleic acid polymers from the polymerase chain reaction mixture.

## Patentansprüche

1. Verfahren zum Nachweis einer Nukleinsäure, bei dem man:
eine Probe, von der angenommen wird, dass sie eine Zielnukleinsäure enthält, in eine mikrofluidische Vorrichtung einführt, die Folgendes umfasst:
ein Substrat (18) mit mehreren darin konstruierten mikrofluidischen Kammern und Kanälen;
eine an der Oberfläche des Substrats (18) haftende Abdeckung;
einen für die Aufnahme einer biologischen Probe konfigurierten Einlass (74);
eine oder mehrere für die Vorbehandlung der biologischen Probe konfigurierte Kammern (76);
eine oder mehrere für die Ausführung einer Polymerasekettenreaktion an der biologischen Probe konfigurierte Kammern (88);
eine oder mehrere für die Trennung eines mit der Polymerasekettenreaktion amplifizierten Nukleinsäurepolymers konfigurierte Kammern (97); und
eine für den Nachweis des amplifizierten Nukleinsäurepolymers konfigurierte poröse Polymerelektrode (64);
die Probe vorbehandelt;
die vorbehandelte Probe der Polymerasekettenreaktion unterzieht; und
die amplifizierten Nukleinsäurepolymere von dem Polymerasekettenreaktionsansatz trennt;
wobei man bei dem Verfahren ferner die amplifizierten Nukleinsäurepolymere unter Verwendung der porösen Polymerelektrode (64) nachweist.

2. Verfahren nach Anspruch 1, wobei das Vorbehandeln der Probe eine oder mehrere Maßnahmen aus Verdauung, Liquidierung, Verdünnung, Lyse und Denaturierung der Probe beinhaltet.

3. Verfahren nach Anspruch 1, bei dem man ferner die amplifizierten Nukleinsäurepolymere mit einer elektrochemisch aktiven Markierung markiert.

4. Verfahren nach Anspruch 3, bei dem man ferner die amplifizierten Nukleinsäurepolymere mit einem spezifischen Komplexierungsprotein markiert.

5. Verfahren nach Anspruch 1, wobei das Trennen der amplifizierten Nukleinsäurepolymere die elektrophoretische Trennung der amplifizierten Nukleinsäurepolymere von dem Polymerasekettenreaktionsansatz beinhaltet.

## Revendications

1. Procédé de détection d'un acide nucléique, comprenant :
l'introduction d'un échantillon suspecté de contenir un acide nucléique cible dans un dispositif microfluidique comprenant :
un substrat (18) ayant une pluralité de chambres et canaux microfluidiques fabriqués dans celui-ci ;
un couvercle adhérant à la surface du substrat (18) ;
une entrée (74) configurée pour recevoir un échantillon biologique ;
une ou plusieurs chambres (76) configurées pour le prétraitement de l'échantillon biologique ;
une ou plusieurs chambres (88) configurées pour soumettre l'échantillon biologique à une réaction de polymérase en chaîne ;
une ou plusieurs chambres (97) configurées pour séparer un polymère d'acide nucléique amplifié par la réaction de polymérase en chaîne ; et
une électrode de polymère poreuse (64) configurée pour détecter le polymère d'acide nucléique amplifié ;
le prétraitement de l'échantillon ;
la soumission de l'échantillon prétraité à la réaction de polymérase en chaîne ; et
la séparation de polymères d'acide nucléique amplifié à partir du mélange de réaction de polymérase en chaîne ;
où le procédé comprend en outre la détection des polymères d'acide nucléique amplifiés en utilisant l'électrode de polymère poreuse (64).

2. Procédé de la revendication 1, dans lequel le prétraitement de l'échantillon comprend un ou plusieurs parmi la digestion, la liquéfaction, la dilution, la lyse et la dénaturation de l'échantillon.

3. Procédé de la revendication 1, comprenant en outre le marquage de polymères d'acide nucléique avec un marqueur électrochimiquement actif.

4. Procédé de la revendication 3, comprenant en outre le marquage des polymères d'acide nucléique avec une protéine complexante spécifique.

5. Procédé de la revendication 1, dans lequel la séparation de polymères d'acide nucléique amplifiés comprend la séparation électrophorétique des polymères d'acide nucléique amplifiés à partir du mélange de réaction de polymérase en chaîne.
